Europäisches Patentamt

European Patent Office

Office européen des brevets

(11) Veröffentlichungsnummer : **0 402 522 B1**

(19)

(12) **EUROPÄISCHE PATENTSCHRIFT**

(45) Veröffentlichungstag der Patentschrift :
**22.02.95 Patentblatt 95/08**

(21) Anmeldenummer : **89120938.9**

(22) Anmeldetag : **11.11.89**

(51) Int. Cl.⁶ : **G01P 15/125**, G01P 15/08

(30) Priorität : **13.06.89 DE 3919190**

(43) Veröffentlichungstag der Anmeldung :
**19.12.90 Patentblatt 90/51**

(45) Bekanntmachung des Hinweises auf die
Patenterteilung :
**22.02.95 Patentblatt 95/08**

(84) Benannte Vertragsstaaten :
**DE FR GB IT**

(56) Entgegenhaltungen :
**EP-A- 0 171 961**
**GB-A- 2 032 110**
**GB-A- 2 204 136**
**US-A- 4 122 718**

(56) Entgegenhaltungen :
**CONTROL ENGINEERING, Band 11, Nr. 7, Juli 1964; D.K. PHILLIPS et al. : "Balanced beam improves angular accelerometer"**
**PROCESS INSTRUMENTATION, Band 1, Nr. 3, Juli 1964, Seiten 138-143; S.Y. LEE: "Variable capacitance signal transduction and the comparison with other transduction schemes"**

(73) Patentinhaber : **VDO Adolf Schindling AG**
**Gräfstrasse 103**
**D-60487 Frankfurt (DE)**

(72) Erfinder : **Wallrafen, Werner**
**Hauptstrasse 127 B**
**D-6231 Sulzbach (DE)**

(74) Vertreter : **Klein, Thomas, Dipl.-Ing. (FH)**
**Sodener Strasse 9**
**D-65824 Schwalbach/Ts. (DE)**

(54) **Beschleunigungssensor.**

EP 0 402 522 B1

**Beschreibung**

Die Erfindung betrifft einen Beschleunigunssensor, insbesondere für Kraftfahrzeuge gemäß dem Oberbegriff des Patentanspruchs 1.

Zur Umwandlung von Beschleunigungswerten in elektrische Signale sind kapazitive Bechleunigungssensoren mit plattenförmigen Elekrodenanordnungen bekannt, bei denen mittels einer seismischen Masse bei Einwirken einer Beschleunigung der Abstand der Platten verändert wird oder die Platten ähnlich einem Drehkondensator verdreht oder verschoben werden. Eine Messung der Kapazität ergibt dann die zu ermittelnde Beschleunigung. Diese bekannten Sensoren weisen jedoch sehr geringe Kapazitäten auf, so daß die Auswertung schaltungstechnische Schwierigkeiten bereitet. Außerdem ist eine seismische Masse erforderlich. Häufig ist die Temperaturempfindlichkeit der Kennliniensteilheit hoch. Außerdem sind mechanisch aufwendige Konstruktionen erforderlich, die keine hohen Schockfestigkeiten erlauben. Ebenso leidet bei den bekannten Sensoren die Nullpunktstabilität unter der Einwirkung von Temperaturen und Überlastungen. Schließlich sind lineare Kennlinien nur mit einem relativ großen Aufwand zu verwirklichen.

Gemäß GB-A-2 204 136 ist ein Neigungssensor offenbart, bei welchem in einem Gehäuse plattenförmige, symmetrisch aufgebaute Elektroden angeordnet sind, die die Form eines Kreis- oder Kreisringausschnittes aufweisen. Die Elektroden sind paarweise, in einer Ebene liegend angeordnet und mit einer Passivierungsschicht bedeckt. Sie tauchen zum Teil so in eine elektrisch leitfähige Flüssigkeit ein, daß der Pegel der leitfähigen Flüssigkeit in der Horizontallage des Neigungssensors bis zur Symmetrieachse der Elektroden reicht.

Bei Veränderung des Neigungssensors aus der Horizontallage ändern sich gegensinnig die mit der Flüssigkeit bedeckten Flächen der Elektroden. Zwischen den Elektroden ist eine Kapazitätsdifferenz meßbar.

Die zuverlässige Funktion dieses Neigungssensors hängt entscheidend von der Einhaltung der Symmetriebedingungen ab, um ein korrektes Ausgangssignal zu erhalten. Die Herstellung eines solchen Sensors erfordert aufgrund der Form der Elektroden aufwendige Justierungen der Elektrodenflächen zur Flüssigkeit.

Aufgabe der Erfindung ist es, einen Beschleunigigungssensor anzugeben, der zuverlässig und genau arbeitet und preiswert herzustellen ist. Außerdem soll der erfindungsgemäße Beschleunigungssensor eine einfache Auswertung des Ausgangssignals ermöglichen.

Erfindungsgemäß wird die Aufgabe durch die Merkmale des Kennzeichens des Patentanspruchs 1 gelöst. Dabei ist vorzugsweise vorgesehen, daß die Elektroden an eine Auswerteschaltung zur Messung der zwischen der Elektrode und der Flüssigkeit vorhandenen Kapazität angeschlossen sind und daß die Auswerteschaltung zur Messung der Kapazität ausgangsseitig an eine Subtraktionsschaltung angeschlossen ist.

Der erfindungsgemäAe Beschleunigungssensor benötigt keine feste seismische Masse und keine mechanisch zu verformenden Elemente, wie beispielsweise Biegebalken mit Dehnungsmeßstreifen oder Quarzen, die durch Temperaturänderungen, Alterung oder Überbeanspruchung ihre Eigenschaften verändern. Der erfindungsgemäße Beschleunigungssensor kann als kompaktes Bauelement geringer Größe realisiert werden mit hoher Schockfestigkeit und hoher Nullpunktstabilität. Dieses Bauelement kann einerseits preiswert hergestellt werden. Andererseits kann eine Leiterplatte, welche eine Auswerterschaltung trägt, direkt mit dem erfindungsgemäßen Beschleunigungssensor bestückt werden. Weitere Vorteile des erfindungsgemäßen Beschleunigungssensors sind der symmetrische Aufbau, eine hohe Kapazitätsänderung, die eine einfache Auswerteschaltung ermöglicht, ein großer Betriebstemperaturbereich, eine lineare Kennlinie, sehr geringe Temperaturabhängigkeit und eine gute elektromagnetische Verträglichkeit.

Die genannten Vorteile des erfindungsgemäßen Beschleunigungssensors ermöglichen insbesondere eine Verwendung in einem Kraftfahrzeug, beispielsweise zur Steuerung der Fahrwerkdämpfung. Die Anwendung ist jedoch nicht auf diesen Zweck beschränkt, sondern kann beispielsweise auch in Luft- und Wasserfahrzeugen erfolgen.

Eine vorteilhafte Ausgestaltung des erfindungsgemäßen Beschleunigungssensors ist dadurch gekennzeichnet, daß zwei Elektroden zueinander parallel verlaufen und etwa zur Hälfte ihrer Länge mit Flüssigkeit bedeckt sind. Vorzugsweise ist dabei vorgesehen, daß das Gehäuse die Form eines Flachrunds aufweist und in der von den Elektroden gebildeten Ebene eine größere Ausdehnung hat als senkrecht zu dieser Ebene. Diese Ausführungsform ermöglicht ein besonders kompaktes Bauteil, das insbesondere dann preiswert ist, wenn das Gehäuse ein handelsübliches Schwingquarzgehäuse ist.

Zur Messung der Beschleunigung in mehreren Richtungen kann gemäß einer Weiterbildung der Erfindung vorgesehen sein, daß mehrere - vorzugsweise drei oder vier - parallel verlaufende Elektroden vorgesehen sind, die paarweise verschiedene Ebenen bilden. Es ist jedoch nicht ausgeschlossen, zur Messung der Beschleunigung in mehreren Richtungen jeweils für eine Richtung einen Beschleunigungssensor mit zwei Elektroden vorzusehen.

Die leitende Flüssigkeit sollte geringe Adhäsionskräfte gegenüber der Innenwandung des Gehäuses aufweisen, damit Hysterese-Einflüsse vernachlässigbar werden. Ferner ist es vorteilhaft, das Zusammenwirken mit den Kohäsionskräften so abzustimmen, daß der Flüssigkeitsstand durch den geringen Abstand zwischen Elektrode und Gehäuse nicht durch Kapillarität beeinflußt wird.

Geeignete Flüssigkeiten, die außerdem elektrisch leitfähig und chemisch entsprechend stabil sind und außerdem das Dielektrikum und das Gehäuse nicht angreifen, stehen an sich zur Verfügung. So eignen sich beispielsweise Wasser, Quecksilber oder Glykol. Vorzugsweise wird ein Dielektrikum mit einer benetzungsvermindernden Oberfläche verwendet, beispielsweise ungesintertes PTFE.

Bei dem erfindungsgemäßen Beschleunigungssensor können die die Elektroden umgebenden Isolierschichten aus dem Dielektrikum relativ dünn ausgelegt werden, so daß sich hohe Kapazitätswerte ergeben. Bei einem praktisch ausgeführten erfindungsgemäßen Beschleunigungssensor wurde eine Füllhöhe von 10 mm und ein Abstand der Elektroden voneinander von ebenfalls 10 mm gewählt, dabei ergaben sich je nach Art und Dicke des Dielektrikums Kapazitätswerte von 30 pF bis 1000 pF, welche mit relativ einfachen Schaltungsmitteln meßbar sind.

Ein erfindungsgemäßer Beschleunigungssensor mit einer vorteilhaften Auswerteschaltung ist dadurch gekennzeichnet, daß zwei monostabile Kippstufen vorgesehen sind, daß die Widerstands- oder Kapazitätswerte die Zeitkonstanten der monostabilen Kippstufen bestimmen und daß jeweils ein Ausgang einer monostabilen Kippstufe mit einem Setzeingang (Trigger-Eingang) der anderen monostabilen Kippstufe derart verbunden ist, daß durch einen Übergang jeweils einer monostabilen Kippstufe in den stabilen Zustand die jeweils andere monostabile Kippstufe in den instabilen Zustand gesetzt wird. Vorzugsweise sind dabei die Ausgänge der monostabilen Kippstufen mit den Setzeingängen über Differenzierglieder verbunden.

Diese Auswerteschaltung zeichnet sich durch einen geringen Aufwand aus und erzeugt ein binäres Ausgangssignal, das in einfacher Weise sowohl von einem Mikroprozessor als auch mit Hilfe einer einfachen Analogschaltung weiterverarbeitet werden kann. Ein weiterer Vorteil besteht darin, daß auf einer Signalleitung Informationen über beide Sensorgrößen ausgegeben werden. Es kann jedoch auch ein symmetrischer Ausgang der Auswerteschaltung genutzt werden, was eine gute elektromagnetische Verträglichkeit zur Folge hat.

Zur weiteren Verarbeitung des Ausgangssignals kann gemäß einer Weiterbildung der Auswerteschaltung vorgesehen sein, daß das Ausgangssignal mindestens einer monostabilen Kippstufe einem Integrator zuführbar ist. Ferner ist die Übertragung eines Analogsignals zu einer weiterverarbeitenden Schaltung dadurch möglich, daß das Ausgangssignal einer monostabilen Kippstufe direkt einem ersten Integrator und invertiert einem zweiten Integrator zuführbar ist und daß die Ausgänge der Integratoren mit Eingängen einer Subtrahierschaltung verbunden sind. Hierdurch wird eine einfache asymmetrische binäre Schnittstelle zwischen der in unmittelbarer Nähe des Sensors befindlichen Auswerteschaltung und einer Schaltung zur weiteren Verarbeitung des Ausgangssignals der Auswerteschaltung gebildet.

Eine symmetrische binäre Schnittstelle wird dadurch gebildet, daß die Ausgangssignale der monostabilen Kippstufe je einem Integrator zuführbar sind und daß die Ausgänge der Integratoren mit Eingängen einer Subtrahierschaltung verbunden sind.

Schaltungen aus zwei sich gegenseitig in den instabilen Zustand setzenden monostabilen Kippstufen schwingen nach einer Störung, beispielsweise durch einen kurzzeitigen Kurzschluß eines der Ausgangssignale, möglicherweise nicht wieder an. Um auch bei einem solchen Fall ein sicheres Wiederanschwingen zu ermöglichen, kann die Auswerteschaltung dadurch weitergebildet werden, daß die Differenzierglieder von je einem Kondensator und je einem an einen Anschluß für die Betriebsspannung angeschlossenen Widerstand bestehen und daß beide Anschlüsse der zu den Differenziergliedern gehörenden Kondensatoren über je eine Diode mit einem Widerstand verbunden sind, dessen von den Dioden abgewandter Anschluß mit Massepotential beaufschlagt ist.

Die Erfindung läßt zahlreiche Ausführungsformen zu. Eine davon ist schematisch in der Zeichnung anhand mehrerer Figuren dargestellt und nachfolgend beschrieben. Es zeigt:

Fig. 1 eine schematische Darstellung zur wirkungsweisen des erfindungsgemäßen Beschleunigungssensors,

Fig. 2 eine Darstellung des von einer Elektrode, einem Dielektrikum und der Flüssigkeit gebildeten Koaxialkondensators,

Fig. 3 einen Längsschnitt durch das Ausführungsbeispiel,

Fig. 4 ein Ersatzschaltbild des Ausführungsbeispiels,

Fig. 5 ein Blockschaltbild einer Auswerteschaltung für den erfindungsgemäßen Beschleunigungssensor,

Fig. 6 die Ausgangssignale der monostabilen Kippstufen,

Fig. 7 verschiedene Möglichkeiten, die Ausgangssignale einer Auswerteschaltung, welche sich in unmittelbarer Nähe eines Sensors befindet, zu einer Verarbeitungsschaltung zu übertragen,

Fig. 8 einen Stromlaufplan einer ersten Ausführungsform und

Fig. 9 einen Stromlaufplan einer weiteren Ausführungsform der Auswerteschaltung nach Fig. 5.

Gleiche Teile sind in den Figuren mit gleichen Bezugszeichen versehen.

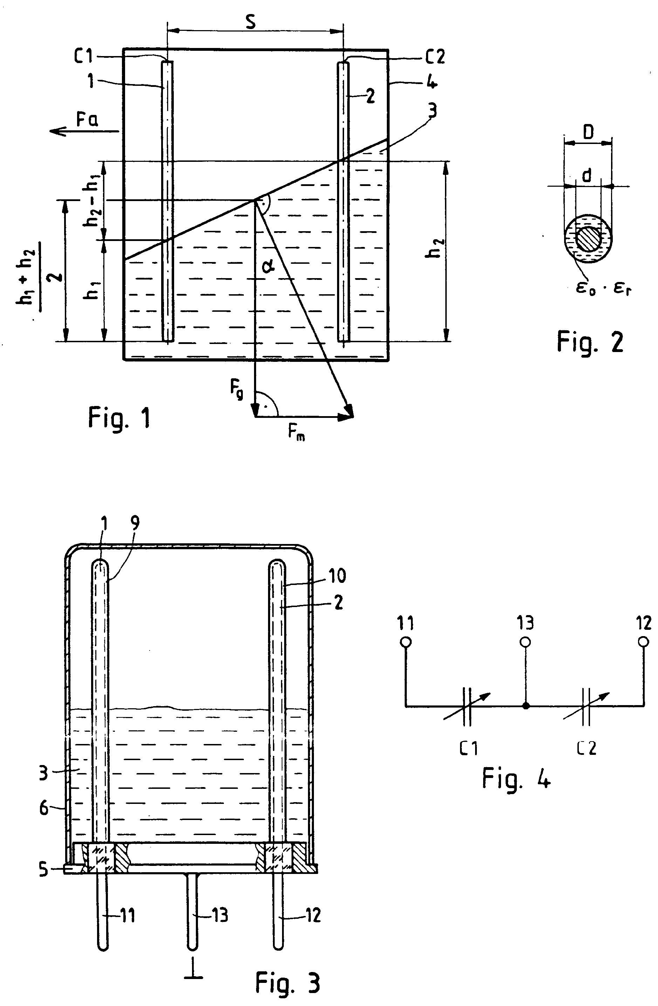

Bei der schematischen Darstellung nach Fig. 1 sind zwei runde, längliche Elektroden 1, 2, die mit einem in Fig. 1 nicht dargestellten Dielektrikum beschichtet sind, in eine elektrisch leitfähige Flüssigkeit 3 getaucht. Eine auf das Gehäuse 4 in Pfeilrichtung wirkende Beschleunigung a bewirkt eine Schrägstellung des Flüssigkeitspegels um den Winkel $\alpha$. Dadurch ist die Elektrode 1 lediglich bis zur Höhe $h_1$ mit Flüssigkeit bedeckt, während die Flüssigkeit bei der Elektrode 2 auf $h_2$ steigt. Der mittlere Flüssigkeitspegel beträgt $(h_1 + h_2)/2$. Wie aus dem in Fig. 1 ebenfalls dargestellten Kräftedreieck ersichtlich ist, ergibt sich für den Winkel $\alpha$: $\tan\alpha = F_m/F_g$, wobei $F_m$ die der Beschleunigungskraft $F_a$ entgegenwirkende Trägheitskraft und $F_g$ die Gewichtskraft ist.

Das Dielektrikum auf der Elektrodenoberfläche bildet zwischen den Elektroden 1, 2 und der leitfähigen Flüssigkeit jeweils einen Kondensator, der in Fig. 2 schematisch dargestellt ist. Die Kapazität eines derartigen Koaxialkondensators ergibt sich zu

$$C = [2\pi\varepsilon_0\varepsilon_r/(\ln D/d)]\cdot h.$$

Dabei ist D der äußere Durchmesser des Dielektrikums, d der Durchmesser der Elektrode und h die von der Flüssigkeit bedeckte Höhe der jeweiligen Elektrode.

Für die Differenz der Kapazitäten ergibt sich dann:

$$C_2 - C_1 = [2\pi\varepsilon_0\varepsilon_r/(\ln D/d)]\cdot(h_2 - h_1).$$

Wie sich leicht aus dem in Fig. 1 dargestellten Kräftedreieck ableiten läßt, ist

$$h_2 - h_1 = s\cdot(a/g),$$

wobei a die Beschleunigung quer zur Erdbeschleunigung g und s der Abstand der Elektroden 1, 2 ist. Insgesamt ergibt sich dann für die normierte Beschleunigung die Gleichung

$$a/g = (C_2 - C_1)\cdot(\ln D/d)/2\pi\varepsilon_0\varepsilon_r s.$$

Dabei ist erkennbar, daß der durch die Messung der Kapazitätsdifferenz gewonnene Wert a unabhängig von der Füllhöhe $(h_1 + h_2)/2$, jedoch abhängig von $\varepsilon$ ist. Bei der Auswertung besteht jedoch die Möglichkeit, gemäß einer Weiterbildung der Erfindung die Differenz durch die Summe der Kapazitätswerte zu dividieren. Dann ergibt sich für die normierte Beschleunigung

$a/g = (C_2 - C_1)\cdot(C_2 + C_1)\cdot(h_1 + h_2)/s$. Dabei ist das Meßergebnis unabhängig von $\varepsilon$, jedoch abhängig von der Füllhöhe. Dieses hat beispielsweise den Vorteil, daß eine Temperaturabhängigkeit von $\varepsilon$ nicht in das Meßergebnis eingeht.

Bei dem in Fig. 3 dargestellten Ausführungsbeispiel sind die beiden Elektroden 1, 2 von dem Boden 5 eines für Schwingquarze erhältlichen Metallgehäuses 6 gehalten. Dabei sind zur Isolierung Glasdurchführungen 9, 10 vorgesehen. Durch eine entsprechende Lötung ist das Gehäuse hermetisch abgedichtet. Die Flüssigkeit 3 bedeckt etwa die Hälfte der Elektroden 1, 2. Verlängerungen der Elektroden 1, 2 dienen gleichzeitig als Lötstifte 11, 12. Ein dritter Lötstift 13, unmittelbar mit dem Gehäuseboden 5 verbunden, bildet die gemeinsame Gegenelektrode.

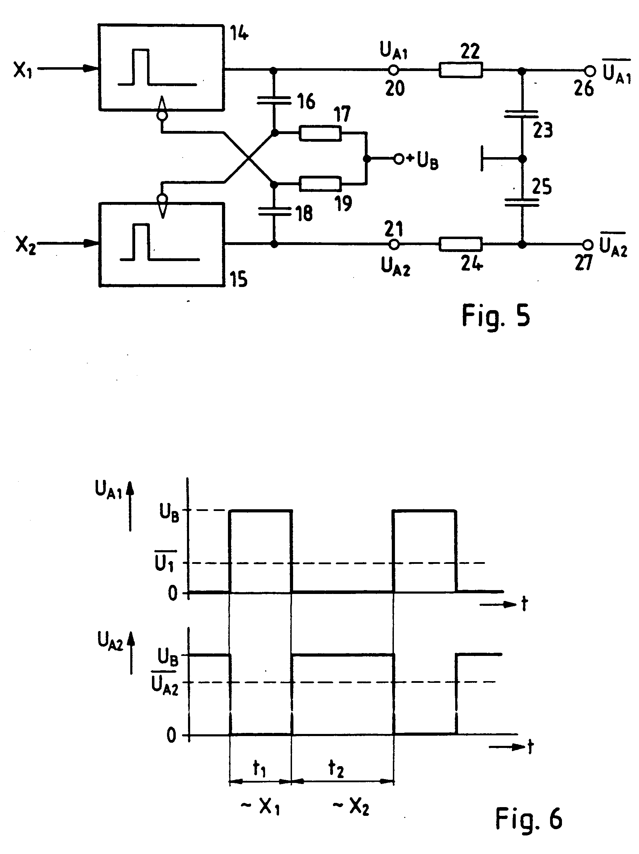

Die Lötstifte 11 bis 13 sind in einem genormten Rastermaß angeordnet, so daß der Beschleunigungssensor unmittelbar auf eine Leiterplatte montiert werden kann. Gegebenenfalls kann der in Fig. 4 dargestellte Beschleunigungssensor mit den Anschlüssen 11 bis 13 nach oben gerichtet verwendet werden. Dadurch wird der Bereich der Durchführung der Elektroden 1, 2 durch den Gehäuseboden 5 nicht mit der Flüssigkeit bedeckt, so daß die Dichtstelle zwischen dem Dielektrikum und dem Gehäuseboden nicht ständig von der Flüssigkeit belastet wird.

Fig. 4 zeigt ein Ersatzschaltbild des erfindungsgemäßen Beschleunigungssensors, das aus zwei Kondensatoren mit den Kapazitäten $C_1$ und $C_2$ besteht, welche entsprechend den obigen Ableitungen von der auf den Beschleunigungssensor wirkenden Beschleunigung abhängen.

Bei der in Fig. 5 dargestellten Schaltung sind zwei monostabile Kippstufen 14, 15 vorgesehen, die derart ausgelegt sind, daß die Dauer des instabilen Zustands proportional einer als Widerstands- oder Kapazitätswert vorliegenden Größe $X_1$ bzw. $X_2$ ist, die im vorliegenden Fall den Kapazitätswerten $C_1$ und $C_2$ entsprechen. Über je ein Differenzierglied 16, 17 bzw. 18, 19 sind die Ausgänge der monostabilen Kippstufen 14, 15 jeweils mit einem invertierenden Setzeingang (im folgenden Trigger-Eingang genannt) der anderen monostabilen Kippstufe verbunden. Dadurch wird jeweils eine monostabile Kippstufe in den instabilen Zustand versetzt, wenn die andere in den stabilen Zustand zurückkehrt.

An den Ausgängen 20, 21 der monostabilen Kippstufen 14, 15 ergeben sich dann Rechtecksignale, deren Verlauf in Fig. 6 dargestellt ist. Dabei sind die beiden Zeitabschnitte $t_1$ und $t_2$ jeweils proportional zu den Eingangsgrößen $X_1$ und $X_2$.

Wird die Differenz der Größen $X_1$ und $X_2$ ausgewertet, so erhält man eine Verminderung der Temperaturempfindlichkeit für den Fall, daß beide Größen den gleichen Temperaturgang aufweisen. Dieses gilt jedoch nur für die Nullpunkt-Stabilität. Für eine Verminderung des Temperaturgangs der Steilheit muß noch durch die temperaturabhängigen Größen dividiert werden. Ein derartiges Signal wird bei der erfindungsgemäßen Ausweteschaltung in einfacher Weise durch Subtraktion der Mittelwerte wie folgt erhalten: $\overline{U_{A1}} - \overline{U_{A2}} = U_B\cdot(X_1 - $

$X_2)/(X_1 + X_2)$.

Bei den meisten Sensoren, insbesondere solchen, bei denen hohe Widerstandswerte oder kleine Kapazitätswerte (wie bei dem erfindungsgemäßen Beschleunigungssensor) ausgewertet werden, befindet sich die Auswerteschaltung unmittelbar bei den Widerständen bzw. Kondensatoren, während ein Gerät, welches die Ausgangssignale der Auswerteschaltung weiterverarbeitet, über eine oder mehrere Leitungen mit der Auswerteschaltung verbunden ist. Die Ausgangssignale der Auswerteschaltung gemäß Fig. 5 bilden eine gute Grundlage zur Übertragung an die weiterverarbeitende Schaltung, beispielsweise ein Steuergerät in einem Kraftfahrzeug. Je nach Erfordernissen im einzelnen kann die Übertragung von der Auswerteschaltung zum Steuergerät in Form eines Binärsignals oder in Form eines Analogsignals erfolgen.

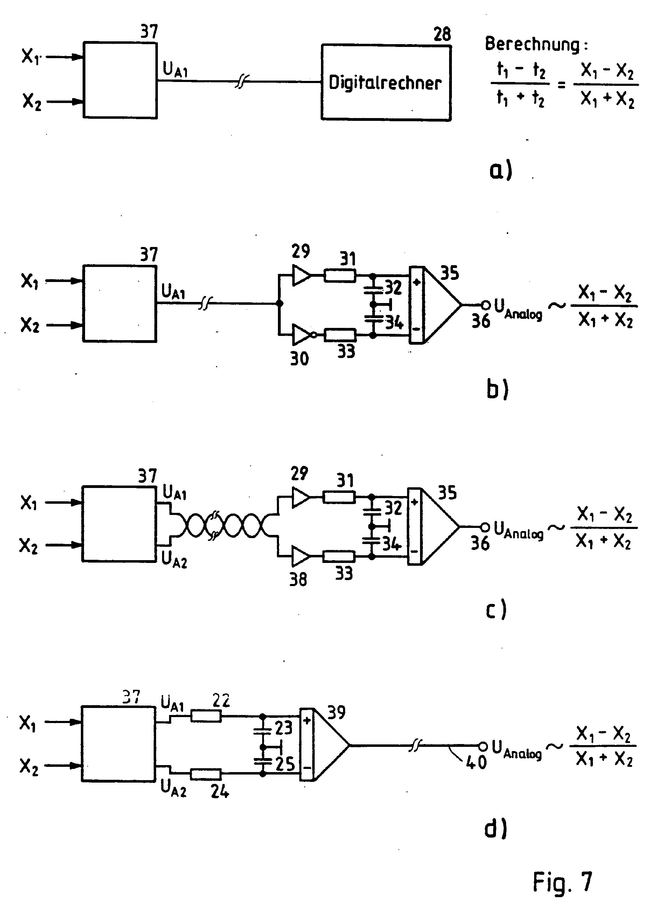

Fig. 7 veranschaulicht dazu mehrere Schaltungsanordnungen. In Fig. 7a wird eines der Ausgangssignale $U_{A1}$ von einer Auswerteschaltung 37 in unveränderter Form, das heißt binär, übertragen. Empfängerseitig ist ein Digital-Rechner 28 vorgesehen, mit dessen Hilfe die Zeiten $t_1$ und $t_2$ gemessen werden, wodurch die Werte $X_1$ und $X_2$ wiedergewonnen werden. Im Digital-Rechner 28 kann in einfacher Weise dann eine Differenz, Summen und Quotientenbildung erfolgen, so daß eine Größe $(X_1 - X_2)/(X_1 + X_2)$ entsteht, welche bei Sensoren, deren Ausgangsgröße zwar von der Differenz der beiden Größen $X_1$ und $X_2$ gebildet wird, wobei jedoch $X_1$ und $X_2$ einem Störeinfluß unterworfen sind - beispielsweise einer Temperaturabhängigkeit, unmittelbar kompensiert ist.

Bei der in Fig. 7b dargestellten Schaltung wird ebenfalls das binäre Signal $U_{A1}$ übertragen. Die weitere Auswertung erfolgt jedoch mit Hilfe einer Analogschaltung, welche aus einem Eingangsverstärker 29, einem Invertierer 30, zwei Integrationsgliedern 31 und 32 bzw. 33 und 34 und einem Differenzverstärker 35 besteht. Durch die Integration mit Hilfe des Integrationsgliedes 31, 32 wird der Mittelwert des Signals $U_{A1}$ gebildet, der zu $X_1/(X_1 + X_2)$ proportional ist. Der Mittelwert des invertierten Signals wird durch das Integrationsglied 33, 34 gebildet und entspricht $X_2/(X_1 + X_2)$. Durch den Differenzverstärker 35 wird dann das erwünschte Ergebnis gebildet, das am Ausgang 36 als Analogsignal vorliegt.

Während die in Fig. 7b dargestellte Schaltung zwischen dem Ausgang der Auswerteschaltung und dem Eingang des Steuergerätes eine asymmetische binäre Schnittstelle darstellt, weist die in Fig. 7c dargestellte Schaltung eine symmetrische binäre Schnittstelle auf. Dazu werden beide Ausgänge der Auswerteschaltung über je eine Leitung mit Eingangsverstärkern 29, 38 des Steuergerätes verbunden. Über Integrationsglieder 31, 32 bzw. 33, 34 und einen Differenzverstärker 35 erfolgt wie bei der Schaltungsanordnung nach Fig. 7b) die Bildung des Analogsignals. Der Vorteil liegt in der Störsicherheit bei der Übertragung über lange Leitungen.

Schließlich ist anhand von Fig. 7d eine weitere Möglichkeit der Signalübertragung zwischen einer Auswerteschaltung und einem Steuergerät dargestellt, bei welcher ein Analogsignal übertragen wird. Dazu befinden sich Integrationsglieder 22, 23 bzw. 24, 25 und ein Differenzverstärker 39 im Bereich der Auswerteschaltung 37. Die Verbindung zum Steuergerät erfolgt dann über eine Leitung 40.

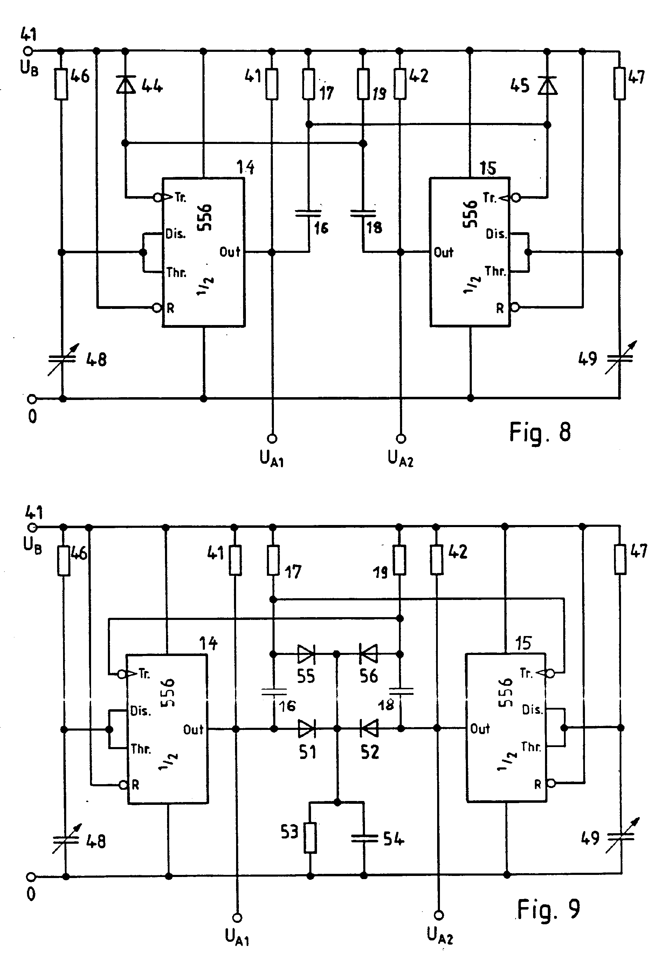

Bei der in Fig. 8 dargestellten Schaltungsanordnung werden die beiden monostabilen Kippstufen 14, 15 von einem integrierten Baustein aus der Typenserie 556 (zweifache Zeitgeberschaltung) gebildet. Wie bei dem Blockschaltbild nach Fig. 5 sind die Ausgänge über je ein Differenzierglied 16, 17 bzw. 18, 19 mit dem invertierenden Trigger-Eingang der jeweils anderen monostabilen Kippstufe verbunden. Widerstände 41 und 42 sind zwischen den Anschluß 43 der Betriebsspannung $U_B$ und den jeweiligen Ausgang geschaltet und dienen als Arbeitswiderstände. Die invertierenden Trigger-Eingänge sind über je eine Diode 44, 45 ebenfalls mit dem Anschluß 41 verbunden, um die Spannung an den Trigger-Eingängen zu begrenzen.

Die Eingänge Dis und Thr der monostabilen Kippstufen 14, 15 sind an je ein Zeitkonstantenglied angeschlossen, das jeweils aus einem Widerstand 46, 47 und einem Kondensator 48, 49 mit veränderbarer Kapazität besteht. Die Kondensatoren 48, 49 gehören zum Beschleunigungssensor, bei welchem in Abhängigkeit von der zu messenden Größe die Kapazitäten gegenläufig verändert werden. Wie im Zusammenhang mit Fig. 5 bereits erläutert, ist die Dauer des jeweils instabilen Zustandes proportional zur Kapazität, wodurch an den Ausgängen der monostabilen Kippstufen 14, 15 die Ausgangssignale $U_{A1}$ und $U_{A2}$ entsprechend dem in Fig. 6 dargestellten Diagramm entstehen.

Die in Fig. 8 dargestellte Schaltungsanordnung schwingt nur an, wenn die Anstiegsgeschwindigkeit der Betriebsspannung beim Einschalten einen vorgegebenen Wert überschreitet. Bei einer kurzzeitigen Unterbrechung der Schwingung, beispielsweise durch einen Kurzschluß oder durch Einwirkung eines Störimpulses, schwingt die Schaltung nicht wieder an. Um ein sicheres Anschwingen zu ermöglichen, ist die in Fig. 9 dargestellte Schaltungsanordnung gegenüber der Schaltungsanordnung nach Fig. 8 in vorteilhafter Weise weitergebildet.

Dazu sind die Ausgänge der monostabilen Kippstufen 14, 15 über je eine Diode 51, 52 und über einen gemeinsamen Widerstand 53 mit Massepotential verbunden. Die Dioden 51, 52 wirken als Oder-Verknüpfung der Signale $U_{A1}$ und $U_{A2}$. Aufgrund der Tatsache, daß $U_{A1}$ und $U_{A2}$ invertiert zueinander sind, beträgt beim Schwingen der Schaltung zu jedem Zeitpunkt die Spannung $U_{53}$ am Widerstand 53 $U_B$ - 0,7V. Ein Kondensator 54 glättet etwaige Spitzen, die während der Flanken von $U_{A1}$ und $U_{A2}$ entstehen.

Bleibt das Schwingen aus, so liegen die Ausgangsspannungen $U_{A1}$ und $U_{A2}$ auf Massepotential und beide Dioden 51, 52 sperren. Die Spannung $U_{53}$ und die Spannungen an den Trigger-Eingängen werden dann durch die Widerstände 17, 19, die dann leitend werdenden Dioden 55, 56 und den Widerstand 53 bestimmt. Die Spannungen an den Trigger-Eingängen fallen somit auf den Wert $U_{tr} = (U_B - 0,7V)/(1 + R_{17}/R_{53}) + 0,7V$. Durch die Wahl der Werte $R_{17}$ und $R_{53}$ der Widerstände 17 und 53 wird $U_{tr}$ unter den im Datenblatt der monostabilen Kippstufe spezifizierten Wert gelegt. Damit gehen beide Ausgangssignale wieder in den instabilen Zustand und die mit den Dioden durchgeführte Starthilfe wird beendet.

Die Dioden 55, 56 dienen neben ihrer Funktion als Starthilfe noch zur Begrenzung der den Trigger-Eingängen zugeführten Spannungen, damit diese nicht über die Betriebsspannung $U_B$ ansteigen. Die Dimensionierung der Widerstände 17 bzw. 19 und 53 erfolgt nach der Gleichung : $R_{17(19)}/R_{53} \cong (U_B - 0,7V)/(U_{tr} - 0,7V)$ - 1, mit $U_B = 5V$ und $U_{tr} \cong 1,26V$ bei Verwendung des Bausteins 556. Daraus ergibt sich $R_{17(19)}/R_{53} \cong 6,68$. Bei einer praktisch ausgeführten Schaltungsanordnung wurde $R_{17} = R_{19} = 47$ kOhm und $R_{53} = 6,8$ kOhm gewählt.

Die Differenzierglieder 16, 17 und 18, 19 haben die Aufgabe, einen kurzen Impuls, der die fallende Flanke des jeweiligen Ausgangssignals kennzeichnet, abzuleiten. Dazu ist eine Zeitkonstante erforderlich, die wesentlich geringer als die Dauer der instabilen Zustände der monostabilen Kippstufen ist. Es ergibt sich daher folgende Bedingung: $R_{17} \cdot C_3 \ll R_{46} \cdot C_{48}$, die sinngemäß auch für die Elemente 18, 19, 47 und 49 gilt.

## Patentansprüche

1. Beschleunigungssensor, insbesondere für Kraftfahrzeuge, bei welchen in einem Gehäuse (4) mindestens zwei Elektroden (1, 2), die von einem Dielektrikum umhüllt sind, zum Teil in eine elektrisch leitfähige, eine Gegenelektrode bildende Flüssigkeit (3) eintauchen, wodurch bei Neigung der Flüssigkeit (3) eine Kapazitätsdifferenz zwischen den Elektroden (1, 2) meßbar ist, **dadurch gekennzeichnet,** daß die Elektroden (1, 2) stabförmig ausgebildet sind, wobei jede stabförmige Elektrode (1, 2) von einer das Dielektrikum bildenden Isolierschicht (9, 10) dicht umhüllt ist, und die stabförmigen Elektroden (1, 2) in ihrer Längserstreckung im wesentlichen parallel zueinander angeordnet sind und im unbeschleunigten Zustand des Sensors senkrecht oder in einem festen Winkel zur Oberfläche der elektrisch leitfähigen Flüssigkeit (3) in diese eintauchen, wobei die Kapazitätsdifferenz zur Beschleunigung durch die hervorgerufene Neigung der Oberfläche der Flüssigkeit (3) zur Längserstreckung der stabförmigen Elektroden (1, 2) oder zum gewählten festen Winkel proportional ist.

2. Beschleunigungssensor nach Anspruch 1, wobei zwei Elektroden (1, 2) zueinander parallel verlaufen und etwa zur Hälfte ihrer Länge mit Flüssigkeit (3) bedeckt sind.

3. Beschleunigungssensor nach Anspruch 2, wobei das Gehäuse (4) die Form eines Flachrunds aufweist und in der von den Elektroden (1, 2) gebildeten Ebene eine größere Ausdehnung hat als senkrecht zu dieser Ebene.

4. Beschleunigungssensor nach Anspruch 3, wobei das Gehäuse ein handelsübliches Schwingquarzgehäuse (4, 6) ist.

5. Beschleunigungssensor nach Anspruch 1, wobei mehrere - vorzugsweise drei oder vier -parallel verlaufende Elektroden vorgesehen sind, die paarweise verschiedene Ebenen bilden.

6. Beschleunigungssensor nach einem der vorhergehenden Ansprüche, wobei das Dielektrikum (9, 10) mit einer benetzungsvermindernden Oberfläche versehen ist.

7. Beschleunigungssensor nach einem der vorhergehenden Ansprüche, wobei die Elektroden (1, 2) mit dem Dielektrikum (Keramik, Glas oder Isolierlack) derart beschichtet sind, daß eine hohe Dielektrizitätszahl und hohe Dichtheit gegenüber der Flüssigkeit resultiert.

8. Beschleunigungssensor nach Anspruch 1, wobei die stabförmigen Elektroden (1, 2) des Beschleunigungssensors an eine Auswerteschaltung (37) zur Messung der zwischen Elektroden (1, 2) und Flüssigkeit (3) vorhandenen Kapazitäten angeschlossen sind, deren kapazitätsproportionale Ausgangssignale auf eine Subtrahierschaltung (28, 35, 39) führen.

9. Beschleunigungssensor nach Anspruch 8, wobei als Auswerteschaltung (37) zwei monostabile Kippstufen (14, 15) vorgesehen sind, wobei die Kapazitätswerte des Beschleunigungssensors die Zeitkonstanten der monostabilen Kippstufen (14, 15) bestimmen und wobei jeweils ein Ausgang einer monostabilen Kippstufe mit einem Setzeingang (Trigger-Eingang) der anderen monostabilen Kippstufe derart verbunden ist, daß durch einen Übergang jeweils einer monostabilen Kippstufe (14, 15) in den stabilen Zustand die jeweils andere monostabile Kippstufe (15, 14) in den instabilen Zustand gesetzt wird.

10. Beschleunigungssensor nach Anspruch 9, wobei die Ausgänge der monostabilen Kippstufen (14, 15) mit den Setzeingängen über Differenzierglieder (16, 17, 18, 19) verbunden sind.

11. Beschleunigungssensor nach einem der Ansprüche 9 oder 10, wobei das Ausgangssignal mindestens einer, monostabilen Kippstufe (14, 15) einem Integrator (22, 23, 24, 25) zuführbar ist.

12. Beschleunigungssensor nach einem der Ansprüche 9 oder 10, wobei die Ausgangssignale der monostabilen Kippstufen (14, 15) je einem Integrator (22, 23; 24, 25; 31, 31; 33, 34) zuführbar sind und die Ausgänge der Integratoren mit Eingängen der Subrahierschaltung (35, 39) verbunden sind.

13. Beschleunigungssensor nach einem der Ansprüche 9 oder 10, wobei das Ausgangssignal einer monostabilen Kippstufe (14) direkt einem ersten Integrator (31, 32) und invertiert einem zweiten Integrator (33, 34) zuführbar ist und die Ausgänge der Integratoren mit Eingängen der Subrahierschaltung (35) verbunden sind.

14. Beschleunigungssensor nach einem der Ansprüche 10 bis 13, wobei die Schwingung mindestens einer monostabilen Kippstufe (14, 15) überwacht wird, und beim Ausbleiben der Schwingung mindestens eine monostabile Kippstufe (14, 15) über den jeweiligen Setzeingang wieder in den instabilen Zustand gesetzt wird.

15. Beschleunigungssensor nach Anspruch 14, wobei durch eine logische Oder-Verknüpfung der beiden Ausgangssignale der monostabilen Kippstufen (14, 15) das Schwingen der Schaltung überwacht wird.

16. Beschleunigungssensor nach einem der Ansprüche 10 bis 15, wobei die Differenzierglieder aus je einem Kondensator (16, 18) und je einem an einen Anschluß (41) für die Betriebsspannung angeschlossenen Widerstand (17, 19) bestehen und beide Anschlüsse der zu den Differenziergliedern gehörenden Kondensatoren (16, 18) über je eine Diode (51, 52; 55, 56) mit einem Widerstand (53) verbunden sind, dessen von den Dioden abgewandter Anschluß mit Massepotential beaufschlagt ist.

## Claims

1. An acceleration sensor, in particular for motor vehicles, comprising in a housing (4) at least two electrodes (1, 2) which are encased by a dielectric and partially immersed into an electrically ducting fluid (3) forming a counter-electrode, thus allowing measuring of a difference in capacity between the electrodes (1, 2) when the fluid (3) is at a slant, **characterized in that** the electrodes (1, 2) are rodshaped and that each rodshaped electrode (1, 2) is tightly encased by an insulation layer (9, 10) forming the dielectric, and the rodshaped electrodes (1, 2) are arranged essentially parallel to each other in their longitudinal extent and are in the unaccelerated state of the sensor immersed vertically or at a fixed angle to the surface of the electrically ducting fluid (3), and that the difference in capacity for the acceleration by way of a caused slant of the surface of the fluid (3) is proportional to the longitudinal extent of the rodshaped electrodes (1, 2) or to a chosen fixed angle.

2. An acceleration sensor according to claim 1 with two electrodes (1, 2) which extend parallel to each other and are covered approximately halfway of their length by a fluid (3).

3. An acceleration sensor according to claim 2, the housing (4) of which has the shape of a mushroom head and has a greater extent in the plane formed by the electrodes (1, 2) than vertically to this plane.

4. An acceleration sensor according to claim 3, the housing of which is a commercially available piezoelectric crystal casing (4, 6)

5. An acceleration sensor according to claim 1, which is provided with a plurality of electrodes, preferably three or four, which extend in parallel and pairs of which form different planes.

6. An acceleration sensor according to one of the above claims, the dielectric (9, 10) of which is provided with a surface which reduces wetting.

7. An acceleration sensor according to one of the above claims, the electrodes (1, 2) of which are coated with a dielectric (ceramic, glass or insulation paint) in a manner which results in a high dielectric value and high seal against the fluid.

8. An acceleration sensor according to claim 1, the rodshaped electrodes (1, 2) of which are connected to an evaluation circuit (37) for measuring capacities between electrodes 1, 2) and fluid (3) and the capacity proportional output signals are connected to a subtraction circuit (28, 35, 39).

9. An acceleration sensor according to claim 8, being provided with an evaluation circuit (37) in the form of two monostable trigger stages (14, 15), and the capacitative values of the acceleration sensor determining the time constants of the monostable trigger stages (14, 15), and a respective output of a monostable trigger stage being connected to a trigger input of the other monostable trigger stage in such a manner that a transfer of a respective monostable trigger stage (14, 15) into a stable stage transfers the respective other monostable trigger stage (15, 14) into an unstable state.

10. An acceleration sensor according to claim 9, the outputs of the monostable trigger stages (14, 15) being connected to the trigger inputs via differentiating elements (16, 17, 18, 19).

11. An acceleration sensor according to one of claims 9 or 10, with the output signal of at least one monostable trigger stage (14, 15) being fed to an integrator (22, 23, 24, 25).

12. An acceleration sensor according to one of claims 9 or 10, with the output signals of the monostable trigger stages (14, 15) being fed to a respective integrator (22, 23; 24, 25; 31, 31; 33, 34), and the outputs of the integrators being connected to the inputs of the subtraction circuit (35, 39).

13. An acceleration sensor according to one of claims 9 or 10, with the output signal of a monostable trigger stage (14) being fed directly to a first integrator (31, 32) and invertedly to a second integrator (33, 34), and the outputs of the integrators being connected to the inputs of the subtraction circuit (35).

14. An acceleration sensor according to one of claims 10 to 13, the oscillation of at least one monostable trigger stage (14, 15) being monitored, and in the absence of an oscillation at least one monostable trigger stage (14, 15) again being placed into an unstable stage via a respective trigger input.

15. An acceleration sensor according to claim 14, with the oscillation of the circuit being monitored by a logic Or-connection of the two output signals of the monostable trigger stages (14, 15).

16. An acceleration sensor according to one of claims 10 to 15, the differentiating elements being formed by a respective capacitor (16, 18) and a respective resistor (17, 19) which is connected to a connection to the power supply, and both connections of the capacitors (16, 18) of the differentiating elements being connected via a respective diode (51, 52; 55, 56) to a resistor (53), its connection facing away from the diodes being loaded with mass potential.

## Revendications

1. Capteur d'accélération, destiné notamment aux véhicules automobiles dans lequel, dans un boîtier (4) au moins deux électrodes (1, 2), qui sont entourées d'un diélectrique, plongent en partie dans un liquide (3) électriquement conducteur, formant une électrode antagoniste, grâce à quoi, lorsque le liquide (3) est incliné, une différence de capacité peut être mesurée entre les électrodes (1, 2), caractérisé en ce que les électrodes (1, 2) ont une forme de tige, chaque électrode (1, 2) en forme de tige étant entourée de façon, étanche par une couche isolante (9, 10) formant le diélectrique, et en ce que les électrodes (1, 2) en forme de tiges sont disposées sensiblement parallèlement l'une à l'autre dans leur sens longitudinal et, le capteur étant à l'état de non accélération, plongent perpendiculairement ou avec un angle fixe par rapport à la surface du liquide (3) électriquement conducteur dans celui-ci et la différence de capacité étant proportionnelle à l'inclinaison, provoquée par l'accélération, de la surface du liquide (3) par rapport à la direction longitudinale des électrodes (1, 2) en forme de tiges ou par rapport à l'angle fixe choisi.

2. Capteur d'accélération selon la revendication 1, dans lequel deux électrodes (1, 2) s'étendent parallèlement l'une à l'autre et sont recouvertes par le liquide (3) jusqu'à environ la moitié de leur longueur.

3. Capteur d'accélération selon la revendication 2, dans lequel le boîtier (4) a la forme d'un cylindre plat et a une plus grande extension dans le plan formé par les électrodes (1, 2) que perpendiculairement à ce plan.

4. Capteur d'accélération selon la revendication 3, dans lequel le boîtier (4, 6) pour quartz oscillant est un boîtier courant dans le commerce.

5. Capteur d'accélération selon la revendication 1, dans lequel sont prévues plusieurs électrodes -de préférence trois ou quatre- s'étendant parallèlement et qui forment par paires des plans différents.

6. Capteur d'accélération selon l'une des revendications précédentes, dans lequel le diélectrique (9,10) est doté d'une surface extérieure à mouillabilité réduite.

7. Capteur d'accélération selon l'une des revendications précédentes, dans lequel les électrodes (1, 2) sont revêtues du diélectrique (céramique, verre ou vernis isolant) de façon telle qu'il en résulte un indice diélectrique élevé et une grande étanchéité au liquide.

8. Capteur d'accélération selon la revendication 1, dans lequel les électrodes (1, 2) en forme de tiges du capteur d'accélération sont connectées à un circuit d'évalusation (37) destiné à la mesure des capacités qui existent entre les électrodes (1, 2) et le liquide (3), et dont les signaux de sortie, proportionnels à la capacité, sont amenés à un circuit soustracteur (28, 35, 39).

9. Capteur d'accélération selon la revendication 8, dans lequel sont prévus en tant que circuit d'évaluation deux basculeurs monostables (14, 15) , les valeurs de capacité du capteur d'accélération déterminant les constantes de temps des basculeurs monostables (14, 15) et une sortie de chacun des basculeurs monostables étant connectée à une entrée de branchement (entrée de commande ou "Trigger") de l'autre basculeur monostable, de façon telle que, grâce à un passage de l'un des basculeurs monostables (14, 15) à l'état stable, l'autre basculeur (15, 14) est mis dans l'état instable.

10. Capteur d'accélération selon la revendication 9, dans lequel les sorties des basculeurs monostables (14, 15) sont reliées aux entrées de branchement par l'intermédiaire d'éléments différentiateurs (16, 17, 18, 19).

11. Capteur d'accélération selon l'une des revendications 9 ou 10, dans lequel le signal de sortie d'au moins un basculeur monostable (14, 15) peut être amené à un dispositif intégrateur (22, 23, 24, 25).

12. Capteur d'accélération selon l'une des revendications 9 ou 10, dans lequel les signaux de sortie des basculeurs monostables (14, 15) peuvent être amenés chacun à un dispositif intégrateur (22, 23, 24, 25 ; 31, 32 ; 33, 34), les sorties des dispositifs intégrateurs étant reliées aux entrées du circuit soustracteur (35, 39).

13. Capteur d'accélération selon l'une des revendications 9 ou 10, dans lequel le signal de sortie d'un basculeur monostable (14) peut être amené directement à un premier dispositif intégrateur (31, 32) et sous forme inversée à un deuxième dispositif intégrateur (33, 34), les sorties des dispositifs intégrateurs étant connectées aux entrées du circuit soustracteur (35).

14. Capteur d'accélération selon l'une des revendications 10 à 13, dans lequel l'oscillation d'au moins un basculeur monostable (14, 15) est surveillée, au moins un basculeur monostable (14, 15) étant ramené à l'état instable par l'intermédiaire de l'entrée de branchement considérée en cas d'arrêt de l'oscillation.

15. Capteur d'accélération selon la revendication 14, dans lequel l'oscillateur du circuit est surveillée au moyen d'une liaison logique ou des deux signaux de sortie des basculeurs monostables (14, 15).

16. Capteur d'accélération selon l'une des revendications 10 à 15, dans lequel les éléments différentiateurs sont constitués chacun d'un condensateur (16, 18) et d'une résistance (17, 19) connectée à un branchement (41) pour la tension de fonctionement, les deux branchements des condensateurs (16, 18) faisant partie des éléments différentiateurs étant chacun connectés, par l'intermédiaire d'une diode (51, 52 ; 55, 56) à une résistance (53) dont la borne située à l'opposé des diodes est soumise au potentiel de la masse.

Fig. 1

Fig. 2

Fig. 3

Fig. 4

Fig. 5

Fig. 6

Berechnung:

$$\frac{t_1 - t_2}{t_1 + t_2} = \frac{X_1 - X_2}{X_1 + X_2}$$

a)

b)

$$U_{Analog} \sim \frac{X_1 - X_2}{X_1 + X_2}$$

c)

$$U_{Analog} \sim \frac{X_1 - X_2}{X_1 + X_2}$$

d)

$$U_{Analog} \sim \frac{X_1 - X_2}{X_1 + X_2}$$

Fig. 7

Fig. 8

Fig. 9